Europäisches Patentamt

European Patent Office

Office européen des brevets

(11) Publication number: **0 209 752**
**A1**

(12) **EUROPEAN PATENT APPLICATION**

(21) Application number: **86108662.7**

(22) Date of filing: **25.06.86**

(51) Int. Cl.⁴: **B 65 C 11/02**
**B 41 J 3/36, G 06 K 7/10**

(30) Priority: **26.06.85 JP 137858/85**

(43) Date of publication of application:
**28.01.87 Bulletin 87/5**

(84) Designated Contracting States:
**DE FR GB**

(71) Applicant: **Kabushiki Kaisha Sato**
**15-5, 1-chome, Shibuya**
**Shibuya-ku Tokyo(JP)**

(72) Inventor: **Ono, Tsutomu**
**225, 15-jiwari, Aza-Murasakino Iitoyo-cho**
**Kitakami-shi Iwate-ken(JP)**

(72) Inventor: **Kashiwaba, Tadao**
**7-20, 1-chome Ueno-machi**
**Kitakami-shi Iwate-ken(JP)**

(74) Representative: **Patentanwälte Grünecker, Kinkeldey,**
**Stockmair & Partner**
**Maximilianstrasse 58**
**D-8000 München 22(DE)**

(54) **Portable thermal printer.**

(57) A printer (1) employs an optical reading means (11) such as a pen scanner or touch scanner as data input means, and the operator only has to hold the pen scanner or whatever optical scanning means is used, the other parts being held around the operator's waist (W) or the like. Therefore, the operator can use both hands to handle articles of freight, such as boxes, therefore enabling freight to be handled and labels printed easily and efficiently. In addition, the arrangement of the thermal label roll (R) and thermal printing means (20) enables the overall unit to be made more light and compact.

FIG.1

# BACKGROUND OF THE INVENTION

## Field of the Invention

This invention relates to a portable thermal label printer employing an optical reading means such as a pen scanner or touch scanner as data input means, and more particularly to a portable thermal label printer which has improved portability and operability for when operation is being done while various articles of freight are being handled.

## DESCRIPTION OF THE PRIOR ART

With the conventional portable thermal label printers in use at supermarkets and other such retail outlets, the whole printer has to be held in the hand and used like a hammer in order to have the printed labels peeled off and applied to the merchandise.

At retail outlets the individual items of merchandise are not so large, and so such printers can be used while manipulating the merchandise even if the printer is on the heavy side. However, in the freight business where various articles of freight and boxes have to be handled, there has been a need for a thermal label printer which is light and easy to use. It is of course also preferable that thermal label printers in use at retailers have good portability and operability.

However, because of the weight of the batteries used for driving and the other parts and components, it has been hard to realize a portable thermal label printer which could be operated while being hand-held, was light and had good operability.

In addition, with the label printer/applicators commonly referred to as hand labelers, the design concept generally adhered to called for the thermal label roll to be positioned at the top of the labeler, which led to the following type of problems.

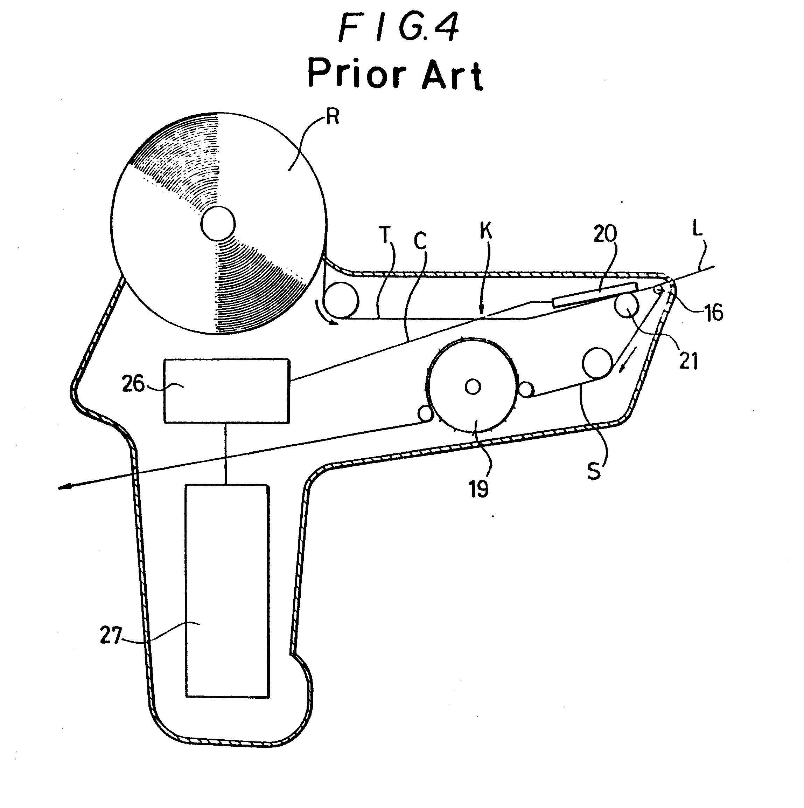

With reference to Figure 4, the thermal label strip T paid out from the thermal label roll R is printed between a thermal print head 20 and a platen 21, and at a bending pin 16 the backing sheet S alone is redirected so that a label L is discharged from the printer unit, and the backing sheet S is moved by engagement with the conveyor roller 19, to be discharged from the rear of the unit. The thermal print head 20 is driven and controlled by a control circuit 26 which is connected to a battery 27.

However, in the arrangement as shown in the figure, the thermal label strip T crosses a flat cable C that is used to connect the control circuit 26 with the thermal print head 20, forming an intersection K. Because of this, it is necessary to, for example, divide the flat cable C so that it goes to the left and right of the thermal label strip T. Such a structure has required that the printer be designed broader, and the unavoidable result has been that, overall, the thermal label printer becomes larger or heavier.

3

## SUMMARY OF THE INVENTION

An object of the present invention is to provide a portable thermal label printer which can be operated easily to print labels even while relatively large articles of freight are being handled.

The present invention attains this object by providing a portable thermal label printer whereby the only portion that is held in the hand is the optical scanning means, such as a pen scanner or touch scanner, and which is light and easy to operate, and the printing and other mechanisms can be arranged about the person, freeing the operator's hands and thereby improving work efficiency, while at the same time, by eliminating the intersection between the thermal print head flat cable and the thermal label strip, enables the printer to be made smaller overall.

## BRIEF DESCRIPTION OF THE DRAWINGS

Figure 1 is a sectional side view of the portable thermal label printer according to this invention;

Figure 2 is a perspective view of a segment of the label strip;

Figure 3 is a view illustrating the printer connected to a microcomputer;

Figure 4 is an outline view of a conventional portable thermal label printer; and

Figure 5 is a view of the principal portions in the vicinity of the thermal print head.

## DESCRIPTION OF THE PREFERRED EMBODIMENT

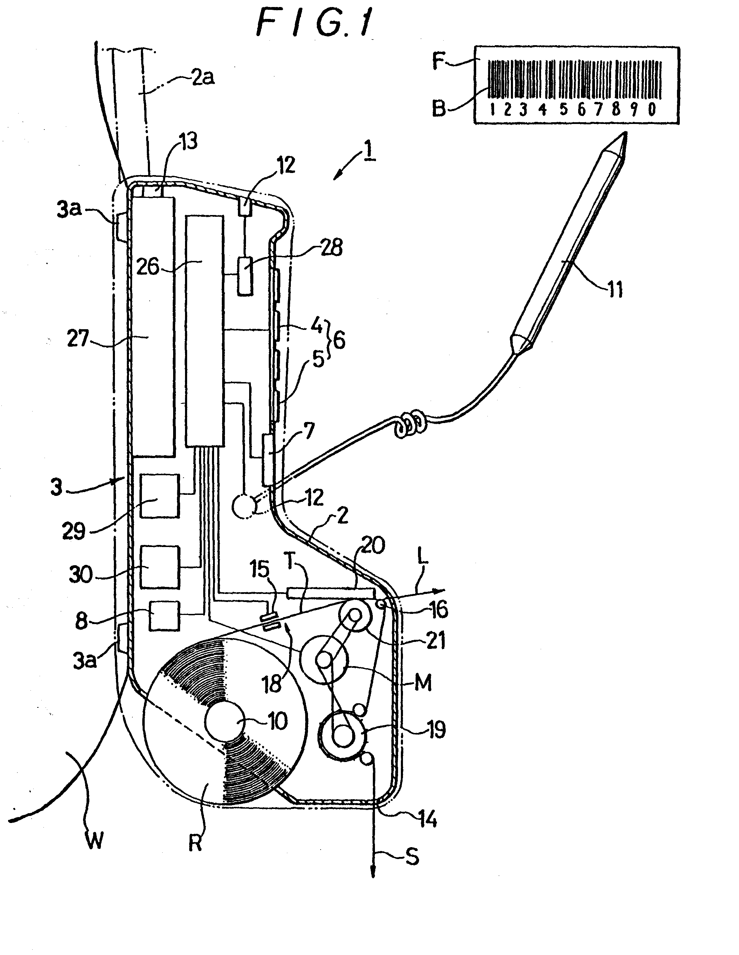

With reference to Figure 1, the main unit 2 of a printer constructed for portability has a side surface 3 for contacting a desired part of a person's body, such as for example the waist W of an operator. The side surface 3 is provided with feet 3a formed of rubber or the like, so as to enable the printer to be set on any desired surface for use as a desk-top type printing unit. The main unit 2 is also provided with a shoulder carrying means 2a to enable the main unit 2 to be carried from the shoulder as well as about the waist. A belt or the like may also be used to enable the main unit 2 to be provided about the waist W.

The main unit 2 is provided on its top surface with data and command entry means consisting of a keyboard 6 comprising a numeric pad 4 and various function keys 5, and at a position above the keyboard with a display 7 such as a liquid crystal display, for example. The main unit 2 is also provided with a power switch 8 on one side. The main unit 2 is further provided at a lower portion with a support member 10 for holding a thermal label roll R which consists of a thermal label strip T wound into a roll, the arrangement being such that after labels L are printed and detached the labels L are discharged from slightly below the upper surface portion of the main unit 2.

At the rear end of the main unit 2 are provided a socket 12a for connecting a pen scanner 11 and a socket 13 for connecting a battery 27, which will be described later,

5

to a battery charger. The numeral 14 denotes the discharge outlet for the backing sheet S. The pen scanner 11 can be used to read a slip number bar code B on a label F already affixed to a box or other article of freight (not shown) for input of such data into the printer 1.

The internal structure of the printer 1 will now be explained. The thermal label strip T passes from the thermal label roll R on the support member 10 into a label strip passage 18 via a position sensor 15.

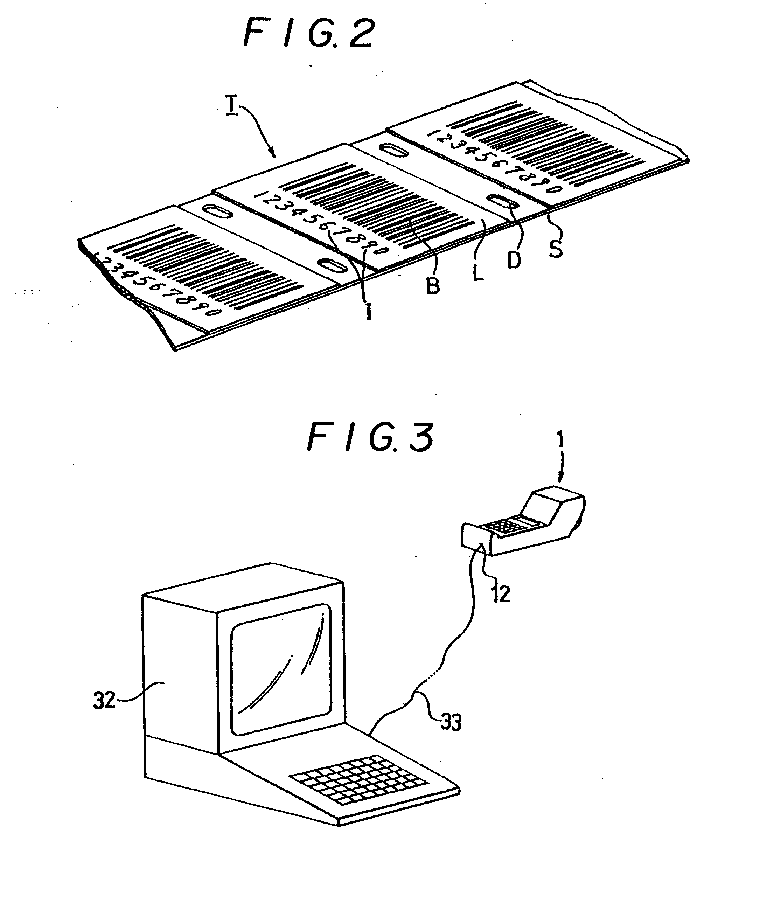

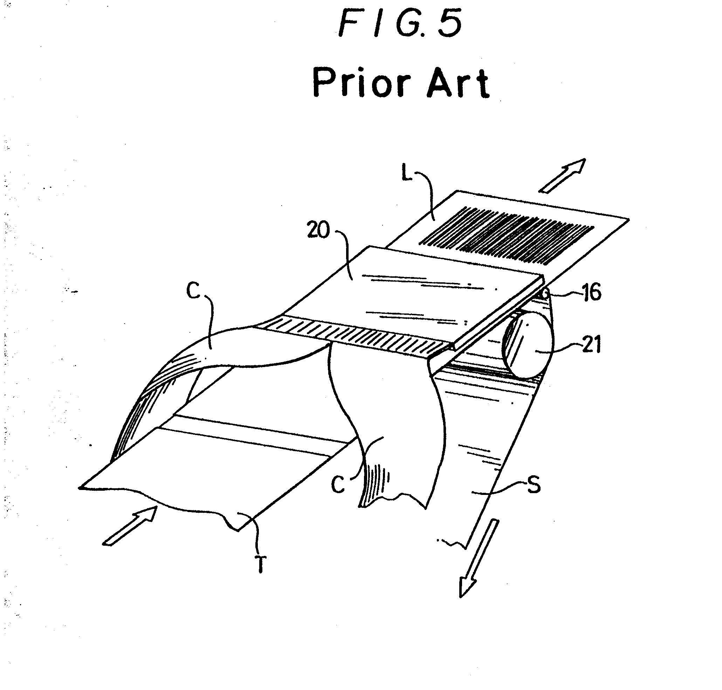

As shown in Figure 2, the label strip T consists of a backing sheet S coated with a separating agent and having a plurality of labels L, each of which is coated with an adhesive, detachably adhered continuously along its length. On the labels L of the thermal label strip T is printed a slip code I which corresponds to the bar code B and other information I on the tag F, and the backing sheet S is provided with holes D which are for position detection purposes. The holes D can also be utilized for conveyance purposes by engagement with the conveyor roller 19 (Figure 1). Reverting to Figure 1, the thermal label strip T passes via the conveyor roller 19 to a thermal print head 20 and a platen 21, is redirected at the platen 21 portion, where the labels L are peeled off, so that just the backing sheet S is directed back to engagement with the conveyor roller 19, and the backing sheet S then feeds out from the main unit 2 via the discharge outlet 14. The conveyor roller 19 is driven by the stepped rotation action of a

6

stepping motor M so as to move the thermal label strip T in the required direction for printing and conveyance.

In the embodiment shown in the figure the label L is peeled off, but the thermal label strip T may also be fed out of the main unit 2 as is, without the peeling, after it has been passed between the thermal print head 20 and the platen 21. Regarding the insertion of the label strip T, the thermal print head 20 may be separated from the platen 21 as indicated by the arrow.

The main unit 2 houses a control circuit 26 which is connected to the battery 27, an interface 28 for data input from and output to external devices, a ROM program memory 29 for communication and control programs, a RAM data memory 30, and the keyboard 6. The display 7, sensor 15, thermal print head 20 and stepping motor M are also connected to and controlled by the control circuit 26. The battery 27 is a rechargeable type and can be connected via the socket 13 to an external battery charger (not shown).

Figure 3 shows the thermal printer connected to a microcomputer 32 to allow data I/O operations therebetween. Data can be transferred to the microcomputer 32 via the socket 12 of the interface 28 and a cable 33. In addition, an acoustic coupler may also be used to link the printer 1 to a host computer via telephone by means of a wired or wireless link (this is not illustrated).

The operation of the present invention will now be explained with reference to an example application of labels during the handling of articles of freight in the freight business.

The operator carries the printer at his waist or hung from the shoulder by means of a belt or shoulder carrying means 2a. This leaves the operator's hands free of the printer 1, with only the very light pen scanner 11 needing to be held in one hand to operate the unit. Therefore, if the operator usually leaves the pen scanner 11 in a breast pocket or the like, he can have both hands free to deal with articles of freight. Thus, the freight items can be dealt with and labels printed out with none of the operational inconvenience of the conventional label printers.

The operator uses the pen scanner 11 to read the bar code B of the tags F which have already been stuck on the articles of freight (which are usually in cardboard boxes). The read data is stored in a data memory 30, and upon a print command signal being issued by the control circuit 26, information having the same kind of content as that of the tags F is printed on the labels L in accordance with the said data. Specifically, one of the function keys 5 is a print button (not shown), and when the print button is pressed the conveyor roller 19 rotates, moving the thermal label strip T, so that at the thermal print head 20 the required bar code B can be printed on the label L in accordance with a print pattern, and as the backing sheet S alone is redirected at the platen 21 the labels L are peeled from the backing sheet S and discharged from the main unit

8

2. Instead of using the said print button, control may be effected whereby the printing is carried out immediately following completion of the reading operation by the pen scanner 11.

When many articles of freight have to be processed for dispatch, labels L thus printed and peeled may be taken and stuck on the freight by hand. Also, the keyboard 6 can be employed for data input rather than the pen scanner 11. Input data can be displayed on the display 7 for confirmation purposes.

When data input by means of the pen scanner 11 or the keyboard 6 has been temporarily stored in the data memory 30, it can if required be uploaded to the microcomputer 32 or a host computer, as shown in Figure 3, by means of the interface 28 and the socket 12, for processing. The socket 12 can also be used for inputting data into the printer from other external devices.

Thus, the printer according to this invention is widely applicable when labels have to be printed in accordance with various types of data transaction, applications which could not be handled by conventional printers.

Some of the potential applications for the present thermal printer include inventory control of retail outlets, management of business data files, printing of blood data cards and sample tube labels at blood banks, printing of bar code labels for patient charts and medical certificates at hospitals and clinics, process, parts and inventory control

9

in factories, and the management of customer data, and data and printing of labels relating to outside suppliers at department stores and supermarkets.

As shown in Figure 1, the support member 10 of the thermal label roll R is provided on the heating-surface side of the thermal print head 20, so there is no intersection of the flat cable C and the thermal label strip T. This enables the overall design to be made more compact, which is also desirable as compactness is highly important in terms of portability.

Thus, with the portable thermal label printer according to this invention the operator only has to hold the pen scanner or whatever optical scanning means is used, and therefore use both hands to handle articles of freight. Therefore, it enables freight to be handled and labels printed efficiently. In addition, the arrangement of the thermal label roll and thermal printing means is such that the overall unit can be easily made more compact, enabling a printer to be provided that is light and has good operability.

CLAIM

1. A portable thermal label printer comprising a label printer unit having a path for the passage of a label strip consisting of thermosensitive labels detachably attached to a backing sheet, a supporting member for supporting a roll of label strip, thermal label position detecting means, a thermal label strip transport means, a thermal printing means for thermal character printing on the thermal labels, a data memory means, a data input means, a program memory means, an input/output means for data communication with external devices, and a control means for controlling the aforesaid means;

wherein the said data input means is a portable optical reader and the printer unit is provided with a means enabling the printer unit to be carried about the human body, and the said support member is located on the side on which the heating-surface of the thermal print head of the said thermal print means is located.

F I G . 1

0209752

- 1/4 -

# F I G. 2

# F I G. 3

# FIG.5
## Prior Art

-⁴⁄₄-

# F I G.4
## Prior Art

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-4 516 016  (KODRON)<br>* Column 4; claim 1; figures * | 1 | B 65 C   11/02<br>B 41 J    3/36<br>G 06 K    7/10 |
| Y | GB-A-2 134 679  (MATHYS)<br>* Page 5, line 125 - page 6, line 32; figure 11 * | 1 | |
| A | US-A-4 497 682  (HAMISCH) | | |

|  | TECHNICAL FIELDS SEARCHED (Int Cl 4) |
|---|---|
|  | B 65 C<br>B 41 J<br>G 06 K |

The present search report has been drawn up for all claims

| Place of search | Date of completion of the search | Examiner |
|---|---|---|
| THE HAGUE | 02-10-1986 | VROMMAN L.E.S. |